# EUROPÄISCHE PATENTSCHRIFT

(11) **EP 3 199 404 B1**
(45) Veröffentlichungstag und Bekanntmachung des Hinweises auf die Patenterteilung: **06.06.2018**
(21) Anmeldenummer: 17000028.5
(22) Anmeldetag: 09.01.2017
(51) Int. Cl.: B60R 7/06

(54) **DECKELVORRICHTUNG, ABLAGEFACH MIT DECKELVORRICHTUNG UND WERKZEUG ZUR MONTAGE**
COVER DEVICE, STORAGE COMPARTMENT WITH COVER DEVICE AND TOOL FOR MOUNTING
COUVERCLE, BAC DE RANGEMENT COMPRENANT UN COUVERCLE ET OUTIL DE MONTAGE

(30) Priorität: 29.01.2016 DE 102016000909
(43) Veröffentlichungstag der Anmeldung: 02.08.2017
(73) Patentinhaber: GRAMMER AG, 92224 Amberg (DE)
(72) Erfinder: Keller, Hubert, 92245 Kümmersbruck (DE); Kaa, Johann, 92272 Freudenberg (DE)
(74) Vertreter: Roche, von Westernhagen & Ehresmann

(56) Entgegenhaltungen:
- DE-A1-102011 120 881
- FR-A1- 2 900 700

## Beschreibung

Die Erfindung betrifft gemäß einem ersten Aspekt der Erfindung eine Deckelvorrichtung. Eine solche Deckelvorrichtung ist aus offenkundiger Vorbenutzung bekannt. Die bekannte Deckelvorrichtung kann an einem Ablagefach befestigt werden und diesen Verschließen. Der Deckel der Deckelvorrichtung ist zwischen einer Schließposition und einer Offenposition bewegbar. Mit einer Verriegelungsvorrichtung ist der Deckel in der Schließposition verriegelbar. Mit einer Feder ist der Deckel in die Offenposition belastet.

Die Feder ist von einer Feder mit einem ersten Federschenkel und mit einem zweiten Federschenkel gebildet. Ein erster Federschenkel ist mit dem Deckel bewegungsverbunden und belastet diesen in die Offenposition. Ein zweiter Federschenkel ist mit einer festen Struktur verbunden, die z.B. von dem Rahmen des Deckels, von der Mittelkonsole oder von dem Gehäuse des Ablagefachs gebildet sein kann.

Der zweite Federschenkel ist in unterschiedlichen Positionen relativ zu der Struktur festsetzbar, um die Federkraft einstellen zu können. Dafür sind mehrere Sitze vorgesehen, in welche der zweite Federschenkel eingehängt werden kann.

Es war Aufgabe der Erfindung eine Deckelvorrichtung mit einer Feder zum Antrieb des Deckels zu schaffen, bei welcher die Federkraft einstellbar ist. Darüber hinaus war es Aufgabe der Erfindung, eine Deckelvorrichtung mit einer leicht montierbaren Feder zu schaffen.

Die Aufgabe wurde gelöst durch eine Deckelvorrichtung mit den Merkmalen des Anspruchs 1.

Die Deckelvorrichtung umfasst wenigstens einen Deckel welcher relativ zu einer Struktur zwischen einer Schließposition und einer Offenposition schwenkbar ist. Die Struktur ist z.B. von einem Rahmen der Deckelvorrichtung, von der Mittelkonsole oder von dem Behälter des Ablagefachs gebildet. In wenigstens einer Position ist der Deckel mit einer Verriegelungsvorrichtung verriegelbar. Z.B. ist der Deckel in der Schließposition und / oder in der Offenposition verriegelbar. Von einer Feder mit einem ersten Federende und mit einem zweiten Federende ist der Deckel in eine Schwenkrichtung belastet. Der Deckel ist z. B. in die Offenposition oder alternativ in die Schließposition belastet. Wenn der Deckel in die Offenposition belastet ist, weist der Deckel z.B. in der Schließposition und ggf. auch noch in der Offenposition eine Vorspannung auf. Die Federkraft der Feder ist einstellbar. Auf diese Weise kann die Öffnungsgeschwindigkeit des Deckels verändert werden.

Die Feder umfasst mindestens einen Drehfederbereich und mindestens einen Schlingfederbereich, wobei der Schlingfederbereich lösbar an der Struktur befestigt ist. Drehfederbereich bedeutet im Sinne der Erfindung, dass dieser Teil der Feder für den Antrieb des Deckels vorgesehen ist und einen ersten Federschenkel umfasst, welcher zwischen einer ersten Position und einer zweiten Position schwenkbar ist. Die erste Position entspricht dabei z.B. der Schließposition des Deckels und die zweite Position entspricht z.B. der Offenposition des Deckels. Mit anderen Worten, wenn der erste Federschenkel in der ersten Position angeordnet ist, befindet sich der Deckel z.B. in der Schließposition und wenn der erste Federschenkel in der zweiten Position angeordnet ist, befindet sich der Deckel z.B. in der Offenposition.

Schlingfederbereich bedeutet im Sinne der Erfindung, dass dieser Federteil mittels Kraftschluss derart an der Struktur befestigt ist, dass seine Position in axialer Richtung und in Umfangsrichtung relativ zu der Struktur fest ist. Der Kraftschluss wird durch den Kontakt zwischen der Innenfläche oder der Außenfläche des Schlingfederbereichs und der Struktur durch Reibkraft hergestellt.

Z.B. durch radiale Aufweitung oder radiale Verengung des Schlingfederbereichs kann der Kraftschluss gelöst werden. Die gesamte Feder kann dann relativ zu der Struktur bewegt werden. D.h., die Feder kann dann relativ zu der Struktur um ihre Längsachse gedreht und / oder axial bewegt werden. Zum Ändern der Federvorspannung des Drehfederbereichs kann also der Kraftschluss durch Aufweitung bzw. Verengung des Schlingfederbereichs gelöst und die Feder um ihre Längsachse gedreht werden, um die Vorspannkraft zu erhöhen oder zu vermindern. Auch zur Montage in einem Sitz der Struktur kann der Schlingfederbereich aufgeweitet bzw. verengt werden und die Feder anschließend in dem Sitz angeordnet werden.

Dann wird der Schlingfederbereich entspannt, wobei er sich durch seine Rückstellkraft an die Struktur anlegt. D.h. entweder legt sich durch Verengung eine Innenfläche des Schlingfederbereichs an eine Außenfläche der Struktur an oder gemäß einer Alternative legt sich druch Aufweitung eine Außenfläche des Schlingfederbereichs an eine Innenfläche der Struktur an.

Ein Vorteil der Erfindung besteht darin, dass die Feder auf einfache Weise montiert werden kann. Nach der Montage kann die Feder leicht gelöst und die Relativposition zu der Struktur geändert werden. Die Federkraft ist so leicht einstellbar. Z.B. können die Öffnungsgeschwindigkeiten von zwei Deckeln auf diese Weise aneinander angepasst werden. Darüber hinaus ist es erfindungsgemäß möglich, die Federkraft stufenlos einzustellen.

Gemäß einer Ausführungsform ist der Schlingfederbereich derart auf einem Sitz der Struktur angeordnet, dass er nach dem Lösen um seine Längsachse drehbar und / oder axial bewegbar ist. Z.B. kann der Schlingfederanteil axial von der Struktur festgelegt sein. Z.B. kann die Struktur eine Schulter aufweisen, welche die Bewegung der Feder in axialer Richtung begrenzt. Nach dem Lösen des Kraftschlusses des Schlingfederbereichs kann dieser dann zumindest relativ zu der Struktur gedreht werden. Gemäß einer Alternative lässt der Sitz der Struktur nach dem Lösen des Kraftschlusses ein axiales sowie ein rotatorisches Bewegen wenigstens des Schlingfederbereichs relativ zu der Struktur zu.

Gemäß einer besonderen Ausführungsform ist der Sitz von einem kreiszylindrischen Zapfen oder einer kreiszylindrischen Aussparung mit einer Mittelachse gebildet, zu welcher eine Längsachse des Schlingfederbereichs koaxial angeordnet ist. Z.B. umschlingt wenigstens der Schlingfederbereich den Zapfen. Eine Innenfläche des Schlingfederbereichs steht dann mit einer Außenfläche des Zapfens in Kontakt und hält die Feder durch Kraftschluss in ihrer Position. Beispielsweise sind die Längsachsen des Drehfederbereichs und des Schlingfederbereichs koaxial zu einer Längsachse des Zapfens angeordnet.

Gemäß einer Alternative ist wenigstens der Schlingfederbereich in einer kreiszylindrischen Aussparung angeordnet und bildet mit der Innenwand der Aussparung einen Kraftschluss. In diesem Fall bildet eine Außenfläche des Schlingfederbereichs mit der Innenwand der Aussparung den Kraftschluss. Ggf. ist auch der Drehfederbereich in der Aussparung angeordnet.

Bei diesen beiden vorerwähnten Ausführungsformen ist nach dem Lösen des Kraftschlusses oder nach der Aufweitung bzw. Verengung des Schlingfederbereichs eine Drehung der Feder um die Längsachse sowie ein axiales Verschieben auf dem Zapfen bzw. in der Aussparung möglich.

Das ermöglicht eine einfache Montage und eine leichte Einstellbarkeit der Vorspannung der Feder.

Z.B. ist eine Längsachse der Feder koaxial zu der Schwenkachse des Deckels ausgebildet. Auf diese Weise kann der erste Federschenkel einfach mit dem Deckel verbunden werden. Z.B. steht der erste Federschenkel unmittelbar mit dem Deckel in Kontakt. Alternativ kann der erste Federschenkel auch mittelbar mit dem Deckel verbunden sein. Es wird aber darauf hingewiesen, dass die Funktion der Erfindung keineswegs beeinträchtigt ist, wenn die Längsachse der Feder und die Schwenkachse des Deckels nicht koaxial zueinander sind.

Die Feder umfasst z.B. einen Haltebereich, dessen Drehlage sich unabhängig von der Drehlage des Drehfederbereichs und / oder der Drehlage des Schlingfederbereichs relativ zu einem Montagewerkzeug nicht verändert. Drehlage ist im Sinne der Erfindung die relative Lage zu dem Montagewerkzeug in rotatorischer Richtung um die Längsachse der Feder. Der Haltebereich bewegt sich nicht, wenn der Drehfederbereich durch eine Bewegung des ersten Federendes oder der Schlingfederbereich durch eine Bewegung des zweiten Federendes ihre Lage und damit ihre Spannung ändern. Mit anderen Worten, wenn der Drehfederbereich und / oder der Schlingfederbereich gedreht werden, wird der Haltebereich nicht mitbewegt.

Der Haltebereich umfasst z.B. wenigstens einen Halteereich, welcher mit einem Sitz des Werkzeugs zusammenwirkt. Der Haltebereich ist z.B. formschlüssig mit einem korrespondierenden Bereich des Werkzeugs in Kontakt bringbar. Auf diese Weise wird ein Drehen des Haltebereichs um eine Längsachse der Feder relativ zu dem Montagewerkzeug verhindert, wenn der erste und / oder der zweite Federschenkel bewegt wird.

Der Haltebereich ist z.B. zwischen dem Drehfederbereich und dem Schlingfederbereich angeordnet.

Gemäß einer Ausführungsform umfasst die Deckelvorrichtung zwei Deckel. Das hat den Vorteil, dass jeder Deckel in der Offenposition nicht so weit über die Struktur, insbesondere über das Ablagefach hinausragt, als wenn das Fach lediglich mit einem Deckel verschließbar wäre.

Die Deckel sind z.B. als sogenannte Schmetterlingsdeckel ausgebildet. Freie Enden jedes Deckels sind z.B. in der Schließposition gegenüberliegend angeordnet. Z.B. wird der Behälter von den Deckeln in der Schließposition im Wesentlichen vollständig abgedeckt. Jeder Deckel ist um eine separate Schwenkachse zwischen der Offenposition und der Schließposition schwenkbar gelagert. Die Schwenkachsen der Deckel sind z.B. parallel angeordnet. Die freien Deckelenden sind z.B. in der Schließposition ebenfalls parallel zueinander angeordnet.

Die Erfindung betrifft gemäß einem zweiten Aspekt ein Ablagefach mit Deckelvorrichtung. Ein solches Ablagefach ist aus offenkundiger Vorbenutzung bekannt. Das Ablagefach ist z.B. Teil einer Fahrzeugmittelkonsole. Mit der Deckelvorrichtung ist das Ablagefach verschließbar.

Es war Aufgabe der Erfindung ein Ablagefach zu schaffen, welcher mit einer Deckelvorrichtung versehen ist, wobei die Deckelvorrichtung wenigstens einen Deckel aufweist, der von einer Feder belastet ist, wobei die Federkraft einstellbar ist.

Die Aufgabe wurde gelöst mit einem Ablagefach mit den Merkmalen des Anspruchs 10.

Das Ablagefach umfasst einen Behälter und eine Deckelvorrichtung gemäß dem ersten Aspekt der Erfindung.

Um Wiederholungen zu vermeiden, wird in Bezug auf die Ausführungsformen und Vorteile der Erfindung auf den ersten Aspekt der Erfindung verwiesen.

Weitere Vorteile und Merkmale der Erfindung ergeben sich anhand eines in den Fig. schematisch dargestellten Ausführungsbeispiels. Es zeigen:
Fig. 1 eine Draufsicht auf ein Ablagefach mit Deckelvorrichtung in der Mittelkonsole eines Fahrzeugs, wobei sich die Deckelvorrichtung in einer Schließposition befindet,
Fig. 2 eine Ansicht gemäß Ansichtspfeil II in Fig. 1,
Fig. 3 eine Ansicht gemäß Ansichtspfeil III in Fig. 1,
Fig. 4 eine Schnittansicht gemäß Schnittlinie IV - IV in Fig. 2,
Fig. 5 eine Schnittansicht gemäß Schnittlinie V -V in Fig. 1,
Fig. 6 in Anlehnung an Fig. 1 eine Draufsicht auf das Ablagefach, wobei sich die Deckelvorrichtung in der Offenposition befindet,
Fig. 7 eine Ansicht gemäß Ansichtspfeil VII in Fig. 6,
Fig. 7a eine Darstellung eines Ausschnitts gemäß Ausschnittlinie Vlla in Fig. 7,

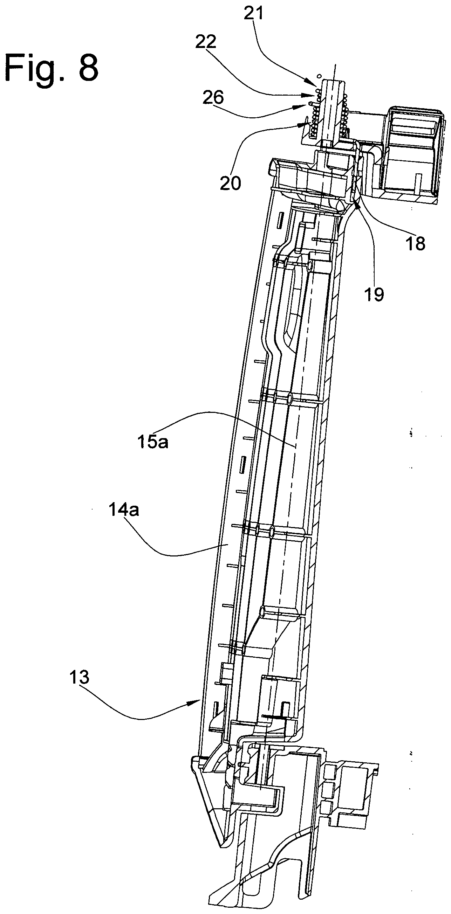

Fig. 8 eine Schnittansicht gemäß Schnittlinie XIII - XIII in Fig. 7a, und

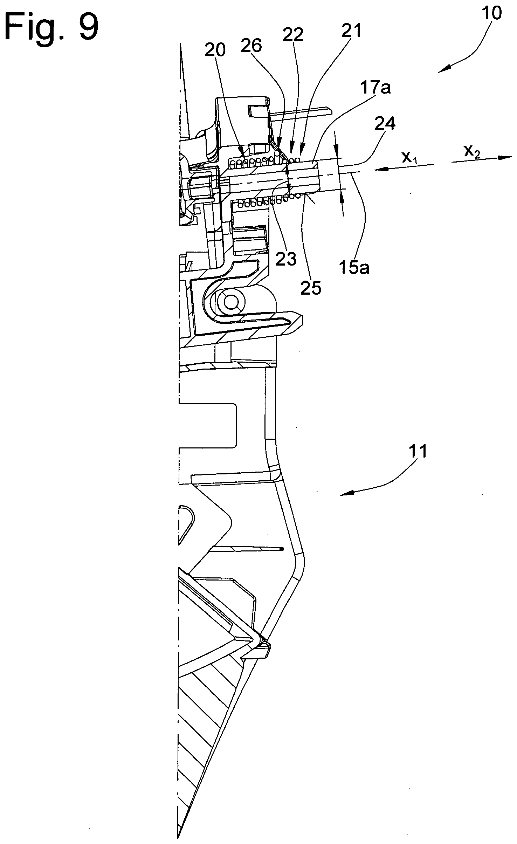

Fig. 9 eine Schnittansicht gemäß Schnittlinie IX - IX in Fig. 6.

Ein Ablagefach insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

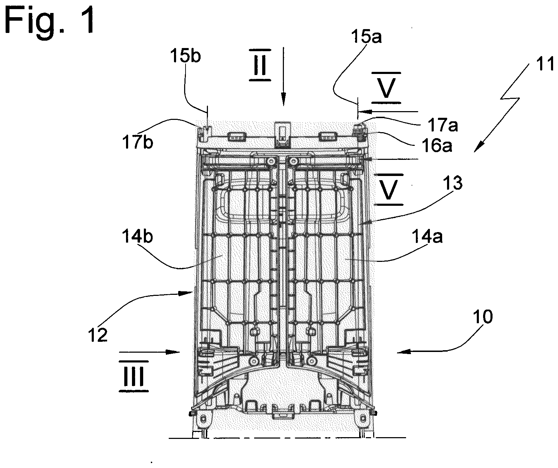

Das Ablagefach 10 ist gemäß Fig. 1 in eine Mittelkonsole 11 eines Fahrzeugs integriert, die sich zwischen zwei nicht dargestellten Sitzen befindet. Das Ablagefach 10 umfasst einen Behälter 12, der mit einer Deckelvorrichtung 13 verschließbar ist. Die Deckelvorrichtung 13 umfasst zwei Deckel 14a und 14b, wobei der Deckel 14a um eine Schwenkachse 15a in Richtung u1 und u2 und der Deckel 14b um eine Schwenkachse 15b in Richtung v1 und v2 schwenkbar gelagert ist.

Gemäß der Fig. 1 bis 5 befindet sich die Deckelvorrichtung 13 in der Schließposition. In der Schließposition ist der Behälter 12 mittels der Deckelvorrichtung 13 verschlossen und der Zugriff auf den Behälter 12 ist nicht möglich. In dem Behälter 12 befindliche Gegenstände können sich nicht aus dem Behälter 12 herausbewegen. Die Deckelvorrichtung ist mit einer nicht dargestellten Verriegelungsvorrichtung in der Schließposition arretiert. Von den Schwenkachsen 15a und 15b abgewandte freie Enden der Deckel 14a und 14b sind in der Schließposition aneinander liegend angeordnet.

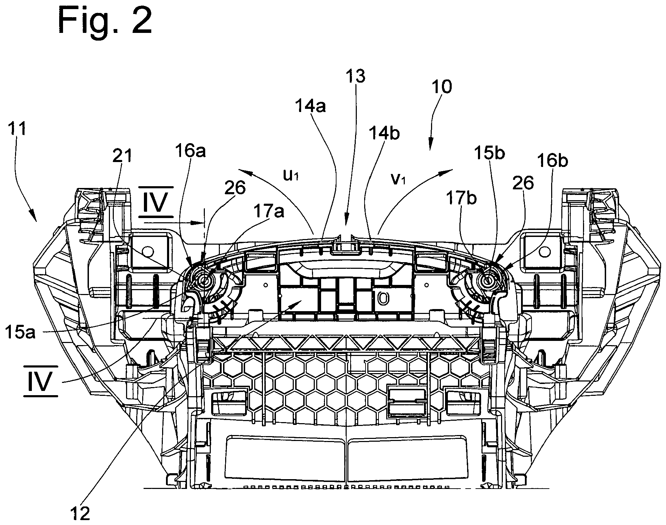

Aus der Schließposition kann die Deckelvorrichtung 13 in die Offenposition bewegt werden, wobei der Deckel 14a um die Schwenkachse 15a in Richtung u1 (siehe Fig. 2) und der Deckel 14b um die Schwenkachse 15b in Richtung v1 schwenkt. Der Deckel 14a ist von einer Feder 16a und der Deckel 14b ist von einer Feder 16b in die Offenposition belastet. Die Längsachse der Feder 16a fällt in dem vorliegenden Ausführungsbeispiel mit der Schwenkachse 15a und die Längsachse der Feder 16b fällt mit der Schwenkachse 15b zusammen. In Fig. 1 ist die Feder 16b der Übersichtlichkeit halber nicht dargestellt. Sobald die Verriegelungsvorrichtung in eine Löseposition bewegt wird, werden die Deckel 14a und 14b daher von den Federn 16a und 16b in die Richtungen u1 bzw. v1 in die Offenposition bewegt.

In Fig. 2 ist erkennbar, dass die Feder 16a auf einer Struktur 17a und die Feder 16b auf einer Struktur 17b gelagert ist. Im vorliegenden Ausführungsbeispiel ist jede der Strukturen 17a und 17b von einem kreiszylindrischen Zapfen gebildet, der Teil eines Rahmens der Deckelvorrichtung 13 ist. Bei der Bewegung zwischen der Schließposition und der Offenposition bewegen sich die Deckel 14a und 14b relativ zu dem Rahmen der Deckelvorrichtung 13. Im vorliegenden Ausführungsbeispiel ist die Längsachse der Struktur 17a koaxial zu der Schwenkachse 15a und die Längsachse der Struktur 17b koaxial zu der Schwenkachse 15b angeordnet. Auch die Längsachse der Feder 16a ist koaxial zu der Schwenkachse 15a und die Längsachse der Feder 16b ist koaxial zu der Schwenkachse 15b angeordnet.

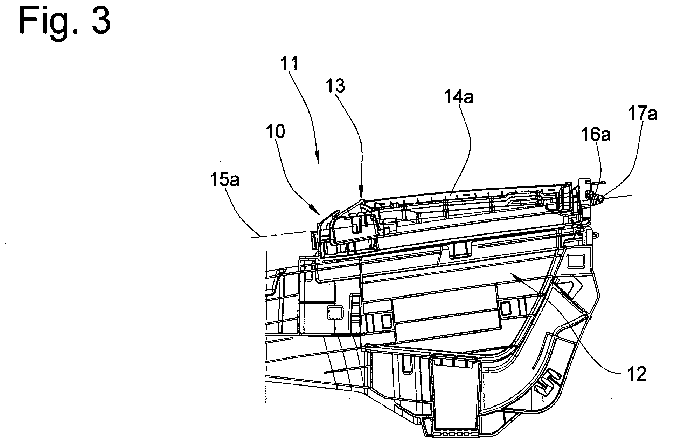

Fig. 3 zeigt die Mittelkonsole 11 mit dem Ablagefach 10 in einer Seitenansicht.

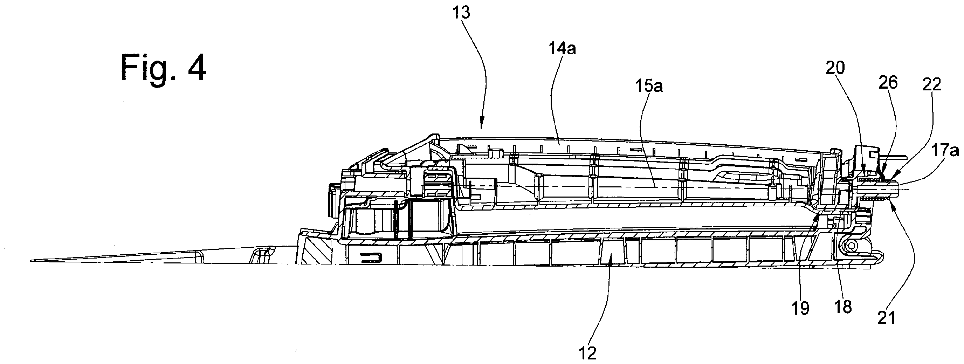

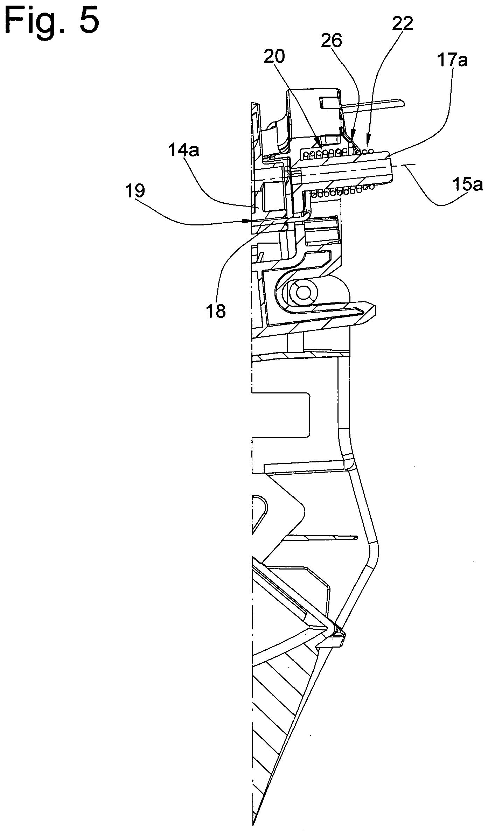

In den Fig. 4 und 5 ist zu erkennen, dass ein erstes Federende 18 der Feder 16a formschlüssig in eine Aussparung 19 des Deckels 14a eingreift, wobei die Aussparung 19 von der Schwenkachse 15a beabstandet angeordnet ist. Ein das erste Federende 18 umfassender Drehfederbereich 20 der Feder 16a ist als Drehfeder ausgebildet, die aufgrund ihrer Vorspannung den Deckel 14a in die Offenposition belastet. Indem die Aussparung 19 von der Schwenkachse 15a beabstandet angeordnet ist, kann die von dem ersten Federende 18 auf den Deckel 14a übertragene Federkraft ein Moment in dem Deckel 14a erzeugen, welches den Deckel 14a in Richtung u1 belastet.

Ein zweites Federende 21 (siehe Fig. 5) ist von einem Schlingfederbereich 22 der Feder 16a umfasst, welcher als Schlingfeder ausgebildet ist. Ein Innendurchmesser 23 des Bereichs 22 weist vor der Montage auf der Struktur 17a ein Untermaß bezüglich eines Durchmessers 24 der Außenfläche 25 der Struktur 17a auf. Wenn die Feder 16a auf der Struktur 17a montiert ist, liegt daher ein Kraftschluss zwischen dem Bereich 22 und der Außenfläche 25 vor, der verhindert, dass die Feder 16a um die Schwenkachse 15a in Richtung u1 oder u2 schwenkbar ist. Darüber hinaus verhindert der Kraftschluss eine Bewegung der Feder 16a in die axialen Richtungen x1 oder x2.

Der Aufbau und die Funktion ist in Bezug auf das Zusammenwirken der Feder 16b mit dem Deckel 14b ebenso ausgebildet, wie bei der Feder 16a und dem Deckel 14a, so dass der Deckel 14a von der Feder 16b in die Offenposition belastet ist.

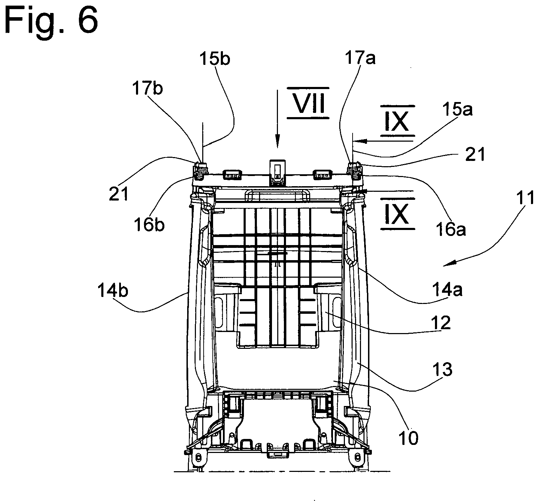

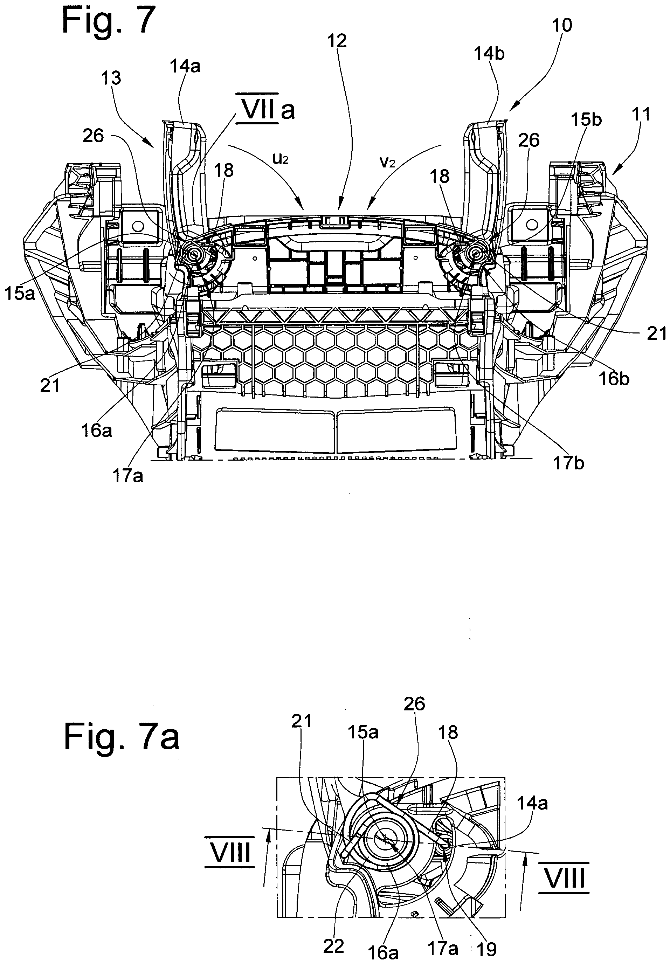

In Fig. 6 ist die Deckelvorrichtung 13 mit den Deckeln 14a und 14b in der Offenposition gezeigt. Ein Zugriff auf den Behälter 12 ist in der Offenposition möglich. Aus der Offenposition ist die Deckelvorrichtung in die Schließposition bewegbar, wobei der Deckel 14a um die Schwenkachse 15a in Richtung u2 und der Deckel 14b um die Schwenkachse 15b in Richtung v2 schwenkt (siehe Fig. 7).

Zum Montieren der Feder 16a sowie zum Einstellen der Federkraft kann der Innendurchmesser 23 des Bereichs 22 vergrößert werden, indem das zweite Federende 21 relativ zu dem Bereich 20 der Feder 16a um die Schwenkachse 15a in Richtung u2 bewegt wird. Wenn der Innendurchmesser 23 vergrößert ist, kann die Feder 16a auf der Struktur 17a montiert oder demontiert oder die Federkraft eingestellt werden. Die Federkraft kann erhöht werden, wenn die Feder 16a um die Schwenkachse 15a in Richtung u1 gedreht wird. Die Federkraft wird vermindert, indem die Feder 16a in Richtung u2 gedreht wird.

Anschließend wird das zweite Federende 21 wieder in Richtung u1 bewegt, wobei sich der Bereich 22 entspannt und der Kraftschluss zwischen der Struktur 17a und dem Bereich 22 wieder hergestellt wird. Die Feder 16a kann dann nicht mehr um die Schwenkachse 15a geschwenkt werden. Auf diese Weise kann die Öffnungscharakteristik bzw. die Öffnungsgeschwindigkeit der Deckel 14a und 14b verändert werden und die Bewegung der Deckel 14a und 14b in die Offenposition kann synchronisiert werden.

Zum Montieren sowie zum Einstellen der Federkraft der Feder 16b kann in gleicher Weise der Innendurchmesser 23 des Bereichs 22 vergrößert werden, indem das zweite Federende 21 relativ zu dem Bereich 20 der Feder 16b um die Schwenkachse 15b in Richtung v2 bewegt wird. Wenn der Innendurchmesser 23 vergrößert ist, kann die Feder 16b auf der Struktur 17b montiert oder demontiert oder die Federkraft eingestellt werden. Die Federkraft kann erhöht werden, wenn die Feder 16b um die Schwenkachse 15b in Richtung v1 gedreht wird. Die Federkraft wird vermindert, indem die Feder 16b in Richtung v2 gedreht wird.

Anschließend wird das Federende 21 wieder in Richtung v1 bewegt, wobei sich der Bereich 22 entspannt und der Kraftschluss zwischen der Struktur 17b und dem Bereich 22 wieder hergestellt wird. Die Feder 16b kann dann nicht mehr um die Schwenkachse 15b geschwenkt werden.

Der Drehfederbereich 20 umfasst einen Haltebereich 26, der über den Außendurchmesser des Schlingfederbereichs 22 sowie über den Außendurchmesser des Drehfederbereichs 20 der Feder 16a vorragt und wenigstens eine Fläche aufweist, die so ausgebildet ist, dass sie formschlüssig mit einer komplementären Fläche eines Montagewerkzeugs in Eingriff gebracht werden kann, so dass bei einem Drehen des zweiten Federendes 21 in Richtung u1 oder u2 der Bereich 20 nicht mitgedreht wird.

## Patentansprüche

1. Deckelvorrichtung mit wenigstens einem Deckel (14a, 14b) welcher relativ zu einer Struktur (17a, 17b), insbesondere einem Deckelrahmen, um eine Schwenkachse (15a, 15b) zwischen einer Schließposition und einer Offenposition schwenkbar ist und in wenigstens einer Position mit einer Verriegelungsvorrichtung verriegelbar ist, wobei der Deckel von einer Feder (16a, 16b) mit einem ersten Federende (18) und mit einem zweiten Federende (21) in eine Schwenkrichtung (u1, v1) belastet ist und wobei die Federkraft der Feder (16a, 16b) einstellbar ist, **dadurch gekennzeichnet, dass** die Feder (16a, 16b) mindestens einen Drehfederbereich (20) und mindestens einen Schlingfederbereich (22) umfasst und dass der Schlingfederbereich (22) lösbar an der Struktur (17a, 17b) befestigt ist.

2. Deckelvorrichtung nach Anspruch 1, **dadurch gekennzeichnet, dass** der Schlingfederbereich (22) derart auf einem Sitz (25) der Struktur ((17a, 17b) angeordnet ist, dass er nach dem Lösen um seine Längsachse (15a, 15b) drehbar ist.

3. Deckelvorrichtung nach Anspruch 2, **dadurch gekennzeichnet, dass** die Struktur (17a, 17b) von einem kreiszylindrischen Zapfen oder einer kreiszylindrischen Aussparung gebildet ist.

4. Deckelvorrichtung nach Anspruch 3, **dadurch gekennzeichnet, dass** eine Längsachse des Zapfens oder der Aussparung koaxial zu der Schwenkachse (15a, 15b) des Deckels ausgebildet ist.

5. Deckelvorrichtung nach einem der vorangehenden Ansprüche, **dadurch gekennzeichnet, dass** die Feder (16a, 16b) einen Haltebereich (26) umfasst, welcher so mit einem Montagewerkzeug in Kontakt bringbar ist, dass er relativ zu dem Montagewerkzeug unbewegbar ist, wenn der Drehfederbereich oder der Schlingfederbereich verdreht werden.

6. Deckelvorrichtung nach Anspruch 5, **dadurch gekennzeichnet, dass** der Haltebereich (26) wenigstens einen Formschlussbereich umfasst, der formschlüssig mit einem komplementären Bereich des Montagewerkzeugs in Eingriff bringbar ist.

7. Deckelvorrichtung nach einem der Ansprüche 5 oder 6, **dadurch gekennzeichnet, dass** der Haltebereich (26) zwischen dem Drehfederbereich (20) und dem Schlingfederbereich (22) angeordnet ist.

8. Deckelvorrichtung nach einem der vorangehenden Ansprüche, **dadurch gekennzeichnet, dass** die Deckelvorrichtung (13) wenigstens zwei Deckel (14a, 14b) mit separaten Schwenkachsen (15a, 15b) umfasst.

9. Deckelvorrichtung nach Anspruch 8, **dadurch gekennzeichnet, dass** freie Deckelenden von zwei Deckeln (14a, 14b) in der Schließposition aneinander liegend angeordnet sind.

10. Ablagefach (10) mit einem Behälter und einer Deckelvorrichtung (13) gemäß einem der Ansprüche 1 bis 9.

## Claims

1. Cover device with at least one cover (14a, 14b), which is pivotable about a pivot axis (15a, 15b) between a closed position and an open position relative to a structure (17a, 17b), in particular relative to a cover frame and is in at least one position lockable with a locking device, whereby the cover is loaded in a pivot direction (u1, v1) by a spring (16a, 16b) with a first spring end (18) and a second spring end (21) and whereby the spring force of the spring (16a, 16b) is adjustable, **characterised in that** the spring (16a, 16b) comprises at least one torsion spring portion (20) and at least one coil spring portion (22) and that the coil spring portion (22) is releasably fixed to the structure (17a, 17b).

2. Cover device according to claim 1, **characterised in that** the coil spring portion (22) is disposed on a seat (25) of the structure (17a, 17b) such that it is pivotable about its longitudinal axis (15a, 15b) after releasing.

3. Cover device according to claim 2, **characterised in that** the structure (17a, 17b) is formed from a circular cylindrical pin or from a circular cylindrical recess.

4. Cover device according to claim 3, **characterised in that** a longitudinal axis of the pin or the recess is formed coaxial to the pivot axis (15a, 15b) of the cover.

5. Cover device according to one of the preceding claims, **characterised in that** the spring (16a, 16b) comprises a holding portion (26), which can be brought into contact by an assembly tool such that it is immovable relative to the assembly tool, when the torsion spring portion or the coil spring portion are rotated.

6. Cover device according to claim 5, **characterised in that** the holding portion (26) comprises at least one positive locking portion, which can be engaged in a positive locking manner with the complementary portion of the assembly tool.

7. Cover device according to claim 5 or 6, **characterised in that** the holding portion (26) is arranged between the torsion spring portion (20) and the coil spring portion (22).

8. Cover device according to one of the preceding claims, **characterised in that** the cover device (13) comprises at least two covers (14a, 14b) with separate pivot axes (15a, 15b).

9. Cover device according to claim 8, **characterised in that** free ends of two covers (14a, 14b) are arranged adjacent to one another in the closed position.

10. Storage compartment (10) with a container and a cover device (13) according to one of the claims 1 to 9.

## Revendications

1. Système de couvercles avec au moins un couvercle (14a, 14b) qui peut pivoter par rapport à une structure (17a, 17b), en particulier un cadre de couvercle, autour d'un axe de pivotement (15a, 15b) entre une position fermée et une position ouverte et peut être verrouillé au moins dans une position avec un système de verrouillage, le couvercle étant poussé par un ressort (16a, 16b) doté d'une première extrémité de ressort (18) et d'une seconde extrémité de ressort (21) dans une direction de pivotement (u1, v1) et la force du ressort (16a, 16b) étant réglable, **caractérisé en ce que** le ressort (16a, 16b) comprend au moins une zone de ressort de torsion (20) et au moins une zone de ressort hélicoïdal (22) et que la zone de ressort hélicoïdal (22) peut être fixée de manière détachable sur la structure (17a, 17b).

2. Système de couvercles selon la revendication 1, **caractérisé en ce que** la zone de ressort hélicoïdal (22) est disposée sur un siège (25) de la structure (17a, 17b) de sorte qu'elle peut tourner autour de son axe longitudinal (15a, 15b) lorsqu'elle est détachée.

3. Système de couvercles selon la revendication 2, **caractérisé en ce que** la structure (17a, 17b) est formée par un tenon cylindrique circulaire ou une cavité cylindrique circulaire.

4. Système de couvercles selon la revendication 3, **caractérisé en ce qu'**un axe longitudinal du tenon ou de la cavité est coaxial par rapport à l'axe de pivotement (15a, 15b) du couvercle.

5. Système de couvercles selon une des revendications précédentes, **caractérisé en ce que** le ressort (16a, 16b) comprend une zone de fixation (26) qui peut être mise en contact avec un outil de montage de sorte qu'elle est inamovible par rapport à l'outil de montage quand la zone de ressort de torsion ou la zone de ressort hélicoïdal est tournée.

6. Système de couvercles selon la revendication 5, **caractérisé en ce que** la zone de fixation (26) comprend au moins une zone à engagement positif qui peut être mise en prise par engagement positif avec une zone complémentaire de l'outil de montage.

7. Système de couvercles selon une des revendications 5 ou 6, **caractérisé en ce que** la zone de fixation (26) est située entre la zone de ressort de torsion (20) et la zone de ressort hélicoïdal (22).

8. Système de couvercles selon une des revendications précédentes, **caractérisé en ce que** le système de couvercles (13) comprend au moins deux couvercles (14a, 14b) avec des axes de rotation (15a, 15b) séparés.

9. Système de couvercles selon la revendication 8, **caractérisé en ce que** les extrémités libres de deux couvercles (14a, 14b) sont disposées l'une contre l'autre en position fermée.

10. Casier de rangement (10) avec un récipient et un système de couvercles (13) selon une des revendications 1 à 9.
